# EUROPEAN PATENT APPLICATION

(11) **EP 3 502 940 A1**
(43) Date of publication of application: **26.06.2019**
(21) Application number: 18212201.0
(22) Date of filing: 13.12.2018
(51) Int. Cl.: G06F 21/32, H04W 4/21, H04W 4/02, H04L 29/08

(54) **INFORMATION PROCESSING DEVICE, ROBOT, INFORMATION PROCESSING METHOD, AND PROGRAM**

(30) Priority: 25.12.2017 JP 2017247740
(71) Applicant: Casio Computer Co., Ltd., Tokyo 151-8543 (JP)
(72) Inventor: ATSUMI, Hiroki, Hamura-shi, Tokyo 205-8555 (JP)
(74) Representative: Grünecker Patent- und Rechtsanwälte PartG mbB

(57) **Abstract**

The information processing device (110) includes target information acquisition means (111), first target determination means (112), and second target determination means (113). The target information acquisition means (111) acquires information regarding a determination target. The first target determination means (112) determines, based on the information that is acquired by the target information acquisition means (111), whether the determination target corresponds to a given target that is preregistered. The second target determination means (113) determines, based on the information that is acquired by the target information acquisition means (111), whether the determination target corresponds to a target that is other than the given target and has a given relationship to the given target.

## Description

This application relates generally to an information processing device, a robot, an information processing method, and a program.

Techniques for acquiring preregistered information through the Internet are known.

Unexamined Japanese Patent Application Kokai Publication No. 2008-048287 discloses a network community system that comprises a person registration server and person information that is preregistered on the person registration server and acquires the preregistered person information.

The network community system of the Unexamined Japanese Patent Application Kokai Publication No. 2008-048287 is configured to acquire person information that is preregistered on the person registration server yet is unable to acquire person information that is not preregistered on the person registration server. This is problematic because acquiring person information that is not preregistered requires new registration which is laborious.

The present disclosure is made to solve the above problem, and thus an objective of the present disclosure is to provide an information processing device, a robot, an information processing method, and a program for efficiently acquiring information of a target that is not preregistered.

A mode of the information processing device according to the present disclosure comprises:
target information acquisition means for acquiring information regarding a determination target,
first target determination means for determining, based on the information that is acquired by the target information acquisition means, whether the determination target corresponds to a given target that is preregistered, and
second target determination means for determining, based on the information that is acquired by the target information acquisition means, whether the determination target corresponds to a target that is other than the given target and has a given relationship to the given target.

A mode of the robot according to the present disclosure comprises:
the information processing device described above;
a moving device that makes the robot travel autonomously;
an operation device that makes the robot perform an operation; and
a control device that controls the moving device and the operation device.

A mode of the information processing method according to the present disclosure is an information processing method for an information processing device, including:
acquiring information regarding a determination target;
determining, based on the information that is acquired, whether the determination target corresponds to a given target that is preregistered; and
determining, based on the information that is acquired, whether the determination target corresponds to a target that is other than the given target and has a given relationship to the given target.

A mode of the program according to the present disclosure allows a computer of an information processing device to function as:
target information acquisition means for acquiring information regarding a determination target;
first target determination means for determining, based on the information that is acquired by the target information acquisition means, whether the determination target corresponds to a given target that is preregistered; and
second target determination means for determining, based on the information that is acquired by the target information acquisition means, whether the determination target corresponds to a target that is other than the given target and has a given relationship to the given target.

According to the present disclosure, it is possible to provide an information processing device, a robot, an information processing method, and a program for efficiently acquiring information of a target that is not preregistered.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

The accompanying drawings, which are incorporated in and constitute a part of the specification, illustrate embodiments of the invention, and together with the general description given above and the detailed description of the embodiments given below, serve to explain the principles of the invention.

A more complete understanding of this application can be obtained when the following detailed description is considered in conjunction with the following drawings, in which:
FIG. 1 is an illustration that shows the robot according to an embodiment of the present disclosure;
FIG. 2 is a block diagram that shows the configuration of the robot according to the embodiment of the present disclosure;
FIG. 3 is an illustration that shows information that is stored by the user storage of the robot according to the embodiment of the present disclosure;
FIG. 4 is a diagram that shows the configuration of the server according to the embodiment of the present disclosure;
FIG. 5 is an illustration that shows information that is stored by the database of the server according to the embodiment of the present disclosure;
FIG. 6 is a flowchart that shows the operation procedure according to the embodiment of the present disclosure;
FIG. 7 is a flowchart that shows the registration procedure according to the embodiment of the present disclosure;
FIG. 8 is a chart for explaining the data transmission procedure according to the embodiment of the present disclosure;
FIG. 9 is an illustration for explaining the operation procedure and the registration procedure according to the embodiment of the present disclosure; and
FIG. 10 is an illustration that shows information that is stored by the database of the server according to a modified embodiment of the present disclosure.

An information processing system that comprises a robot and a server that comprise the information processing device according to a mode for implementing the present disclosure will be described below with reference to the drawings.

### (Embodiment)

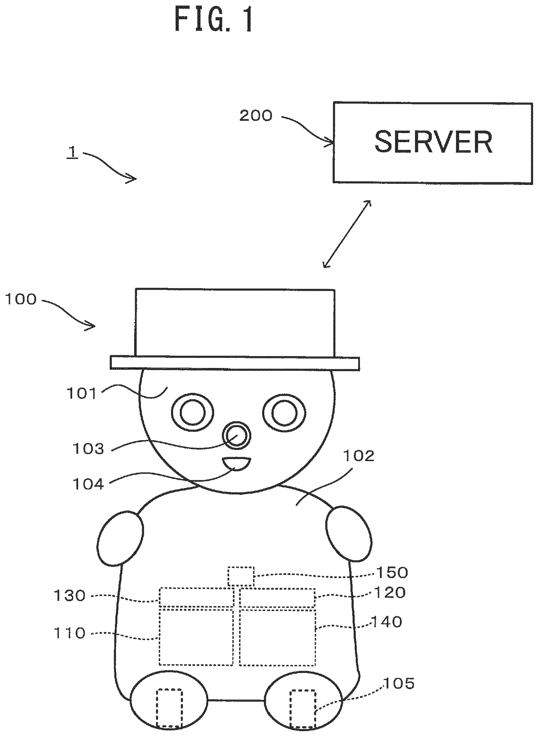

An information processing system 1 according to an embodiment of the present disclosure comprises, as shown in FIG. 1, a robot 100 and a server (second device) 200. The robot 100 is a robot device that has an imager 103 that captures images and captures an image of, for example, the face of a person who is a determination target and autonomously operates. The person includes, for example, a registered person who is a given target that is preregistered with the robot 100 and, for example, an unregistered person who is not registered with the robot 100. The given target includes the user of the robot 100, relatives and friends of the user, and the like. The server 200 is, for example, a social networking service (SNS) server device and stores account information of people who are registered on the SNS. People who are registered on the SNS include registered persons who are preregistered with the robot 100 and unregistered persons who are not registered with the robot 100. The account information includes the name of a person, his facial characteristic quantity, and information of persons who are registered as his friend. The robot 100 and the server 200 are configured to be mutually communicable via a wired line or a wireless line.

The robot 100 has, as shown in FIG. 1, for example, a figure that is deformed from a human and comprises a head 101 on which members that imitate eyes, a mouth, and a nose are disposed, a body (enclosure) 102 on which members that imitate hands and feet are disposed, the imager 103 and a speaker 104 that are disposed on the head 101, moving means (moving device) 105 that is disposed at the bottom, and an operation button 150 that is provided on the back of the body 102. The robot 100 has a controller 110, a communicator (communication means) 120, a user storage 130, and a power source 140 inside the body 102. The controller 110 functions as an information processing device and a control device.

The imager 103 is provided in the lower part of the front of the head 101 at the position of the nose on a human face. The imager 103 captures an image of a person or the like based on the control of the controller 110 that is described later and outputs data that present the captured image to the controller 110. The imager 103 functions as imaging means.

The speaker 104 is provided at the position of the mouth on the head 101 and utters an utterance based on the control of the controller 110.

The moving means 105 comprises a motor and tires and moves the robot 100 based on the control of the controller 110.

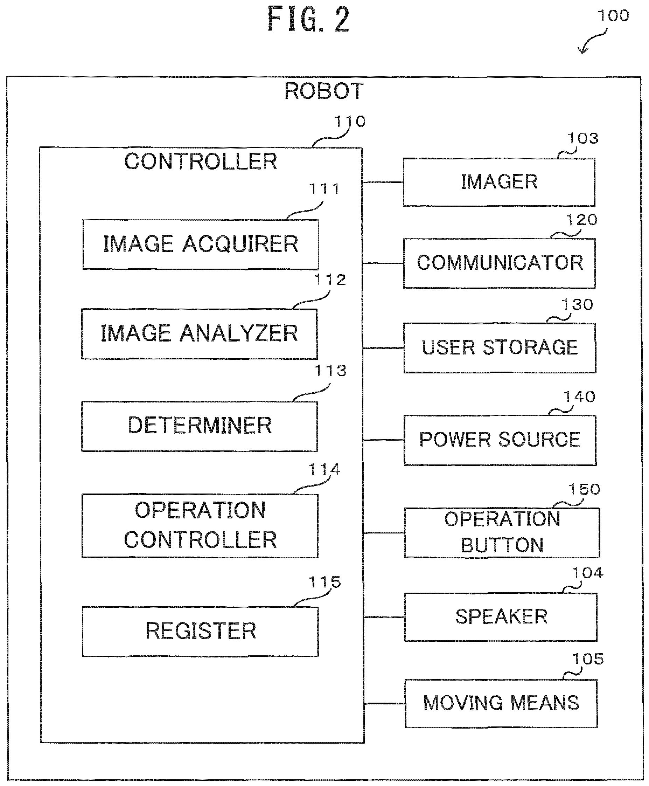

The controller 110 comprises a central processing unit (CPU), a read only memory (ROM), and a random access memory (RAM). The ROM comprises a nonvolatile memory such as a flash memory and stores programs for the controller 110 to realize various functions. The RAM comprises a volatile memory and is used as the work area for the controller 110 to execute programs for performing various procedures. Moreover, the RAM stores data of acquired images. As the CPU reads a program that is stored in the ROM and executes the program on the RAM, the controller 110 functions as, as shown in FIG. 2, an image acquirer (target information acquisition means) 111, an image analyzer (first target determination means) 112, a determiner (second target determination means) 113, an operation controller (operation device) 114, and a register (registration means) 115.

The image acquirer 111 controls the imaging operation of the imager 103, acquires data that present an image that is captured by the imager 103, and stores in the RAM the data of the image that is acquired as data of the acquired image.

The image analyzer 112 analyzes the acquired image that is stored in the RAM and detects the number of persons who appear in the acquired image, m (m is a natural number). Moreover, the image analyzer 112 determines whether the facial characteristic quantity of a person who appears in the acquired image matches the facial characteristic quantity of a registered person who is preregistered in the user storage 130. In detail, the image analyzer 112 extracts the faces of persons from the acquired image through face recognition and detects the number of persons who appear in the captured image, m, from the number of extracted faces. Next, the image analyzer 112 extracts the facial characteristic quantity of the n-th person from the acquired image. n is a natural number from 1 to m. The n-th person can be determined on an arbitrary basis. For example, it is assumed that the person who appears on the right in the image is the first person and the person who appears on the left in the image is the m-th person. Next, the image analyzer 112 determines whether the facial characteristic quantity of each of the first through m-th persons matches the facial characteristic quantity of a registered person who is preregistered in the user storage 130.

If the image analyzer 112 determines that a person who appears in the acquired image does not match the facial characteristic quantity of any registered person, the determiner 113 determines a relationship between the person who appears in the acquired image and the registered person. In detail, the determiner 113 accesses (logs in) the account of a registered person that is stored in the server 200 via the communicator 120 and acquires account information of the registered person that is transmitted by the server 200. Next, it is determined, based on the account information of the registered person, whether the person who appears in the acquired image and the registered person are on close terms. For example, using as an indicator that indicates the degree of closeness whether a person is registered as a friend that is included in the account information of the registered person, a person who is registered as a friend is extracted as a person of interest who is on close terms with the registered person. Next, the determiner 113 acquires the account information of the person of interest that is transmitted by the server 200. The account information that is acquired here is the name and the facial characteristic quantity of the person of interest. The facial characteristic quantity may be extracted from a face picture that is included in the account information. Next, the determiner 113 determines whether the facial characteristic quantity of the person who appears in the acquired image and the facial characteristic quantity of the person of interest match, thereby determining whether the person who appears in the acquired image and the registered person are on close terms.

If the image analyzer 112 determines that the facial characteristic quantity of a person who appears in the acquired image matches the facial characteristic quantity of a registered person who is preregistered in the user storage 130, the operation controller 114 executes a first robot operation. In detail, the first robot operation is to move closer to the person who is determined to be matched by the moving means 105, utter the name of the person from the speaker 104, and the like. Moreover, if the determiner 113 determines that the facial characteristic quantity of a person who appears in the acquired image matches the facial characteristic quantity of a person of interest that is acquired from the server 200, the operation controller 114 executes a second robot operation (a given operation). In detail, the second robot operation is, for example, to move closer to the person who appears in the acquired image by the moving means 105, utter the name of the person from the speaker 104, say "How do you do?" in greeting as an expression of feeling, and the like.

If the determiner 113 determines that the facial characteristic quantity of a person who appears in the acquired image matches the facial characteristic quantity of a person of interest that is acquired from the server 200 and that the person is the person of interest, the register 115 automatically registers in the user storage 130, as a new given target, data that present the name and the facial characteristic quantity that are stored in the account of that person.

The communicator 120 communicates with the server 200 and receives the account information of a registered person and the account information of a person who is registered as a friend with the registered person. The communicator 120 comprises a wireless communication module of a wireless local area network (LAN), Bluetooth (registered trademark), or the like.

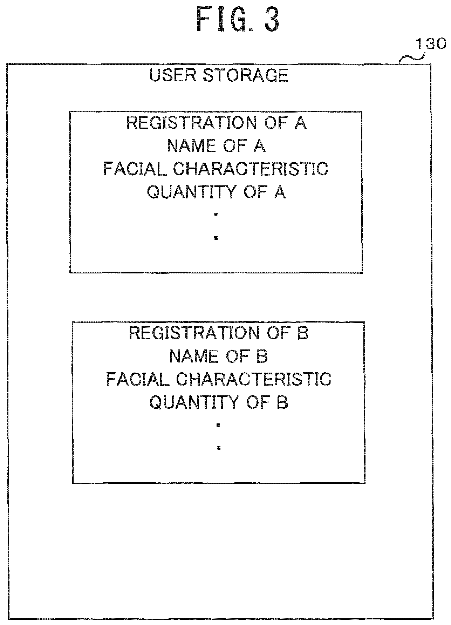

The user storage 130 comprises a nonvolatile memory such as a flash memory and stores, as shown in FIG. 3, the name, the facial characteristic quantity, and the like of a registered person who is preregistered.

Returning to FIG. 2, the power source 140 comprises a rechargeable battery that is built in the body 102 and supplies electric power to the parts of the robot 100.

The operation button 150 is provided on the back of the body 102, serves as a button for operating the robot 100, and includes a power button.

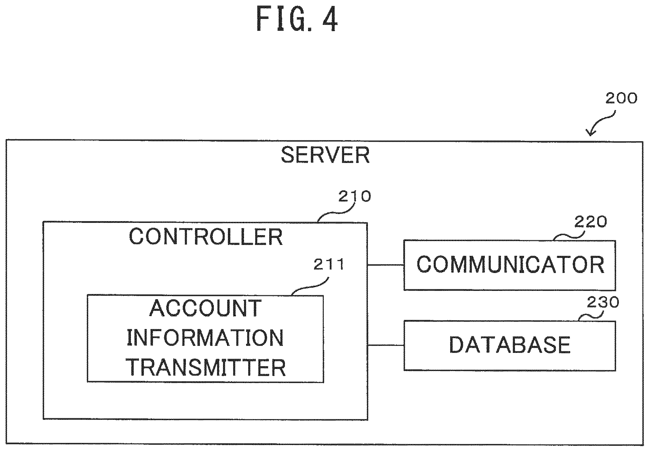

The server 200 comprises, as shown in FIG. 4, a controller 210, a communicator 220, and a database 230.

The controller 210 comprises a CPU, a ROM, and a RAM. The ROM comprises a nonvolatile memory such as a flash memory and stores programs for the controller 210 to realize various functions. The RAM comprises a volatile memory and is used as the work area for the controller 210 to execute programs for performing various procedures. As the CPU reads a program that is stored in the ROM and executes the program on the RAM, the controller 210 functions as an account information transmitter 211.

The account information transmitter 211 acquires information that is transmitted by the robot 100 and presents the name of the account of a registered person via the communicator 220, searches the database 230 for the account of the registered person, and transmits the account information of the registered person to the robot 100. The account information includes information that presents a person of interest who is a person who is registered as a friend with the registered person. When information that is transmitted by the robot 100 and presents a person of interest is acquired, the account of the person of interest is searched for. Next, the account information of the person of interest is transmitted to the robot 100. The account information includes the name and the facial characteristic quantity of a person.

The communicator 220 communicates with the communicator 120 of the robot 100 and transmits the account information of a registered person and the account information of a person of interest. The communicator 220 comprises a wireless communication module of a wireless local area network (LAN), Bluetooth (registered trademark), or the like.

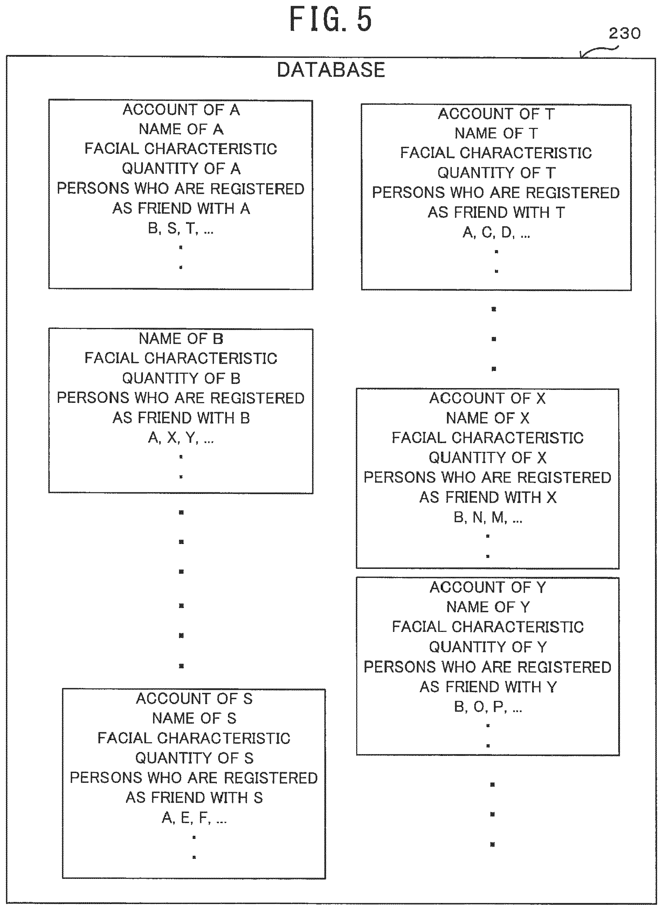

The database 230 comprises an SNS database that stores, as shown in FIG. 5, accounts A, B, ..., X, Y, .... The accounts A, B, ..., X, Y, ... each store a name, a facial characteristic quantity, persons who are registered as a friend, and the like. For example, the account A includes the name of A, the facial characteristic quantity of A, persons B, S, T, ... who are registered as a friend with A.

Next, the operation procedure and the registration procedure that are executed by the robot 100 and the data transmission procedure that is executed by the server 200, which have the above configurations, will be described. When an imaged person is a registered person, the operation procedure includes a procedure for the robot 100 to execute a given operation. When an imaged person is an unregistered person, in the registration procedure, the robot 100 accesses the server 200 to determine whether the person is on close terms with a registered person and if on close terms, executes a given operation.

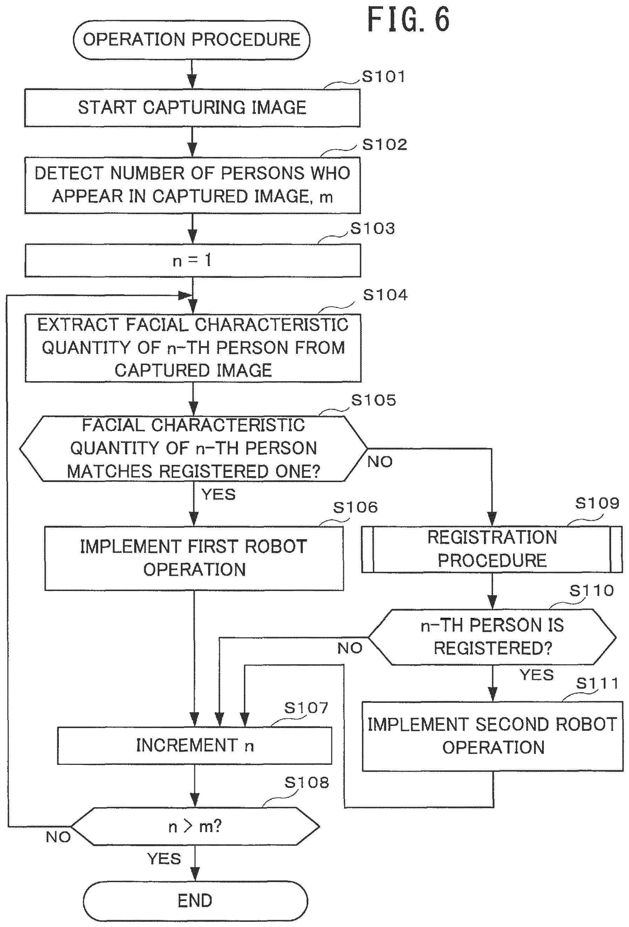

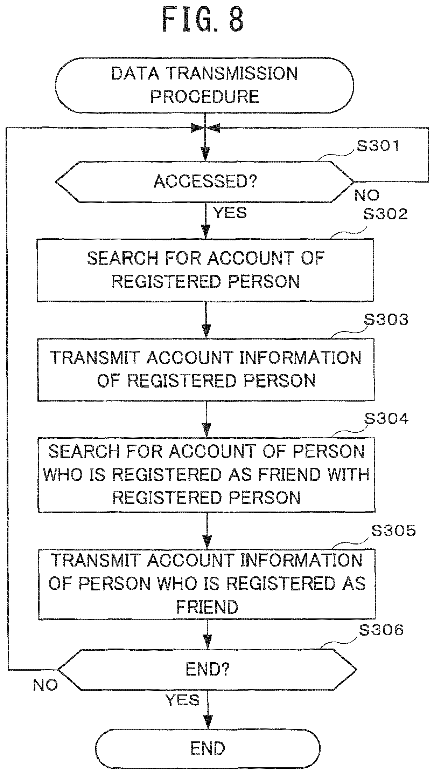

As the user operates the operation button 150 to power on, the robot 100 responds to the order to power on and starts the operation procedure shown in FIG. 6. As the server administrator powers on the server 200, the data transmission procedure shown in FIG. 8 is started. The operation procedure that is executed by the robot 100 will be described below using the flowchart.

First, the image acquirer 111 makes the imager 103 start capturing an image (Step S101) and stores the captured image in the RAM as an acquired image. Next, the image analyzer 112 detects the number of persons who appear in the acquired image, m (Step S102). In detail, the image analyzer 112 extracts the faces of persons from the image through face recognition and detects the number of persons who appear in the acquired image, m, from the number of extracted faces. Next, a variable n = 1 is set (Step S103). Next, the image analyzer 112 extracts the facial characteristic quantity of the n-th person from the acquired image (Step S104). The n-th person can be determined on an arbitrary basis and, for example, it is assumed that the person who appears on the right in the image is the first person and the person who appears on the left in the image is the m-th person. Next, the image analyzer 112 determines whether the facial characteristic quantity of the n-th person matches the facial characteristic quantity of a registered person who is preregistered in the user storage 130 (Step S105).

If determined to be matched (Step S105; Yes), the operation controller 114 executes a first robot operation (Step S106). In detail, the first robot operation includes moving closer to the n-th person and uttering the name of the n-th person. Next, the variable n is incremented (Step S107). Next, the operation controller 114 determines whether the variable n > the number of persons, m, is satisfied (Step S108). If determined that the variable n > the number of persons, m, is not satisfied (Step S108; No), the processing returns to the Step S104 to extract the facial characteristic quantity of the n-th person.

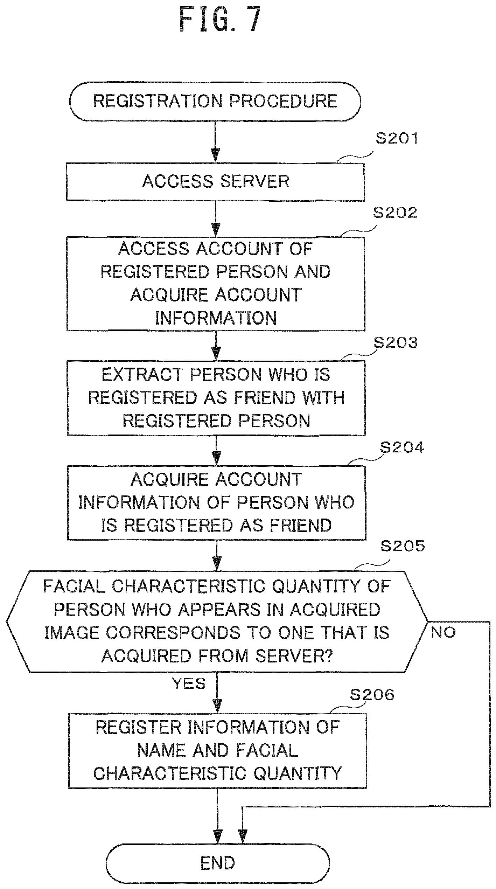

If the image analyzer 112 determines that the facial characteristic quantity of the n-th person does not match the facial characteristic quantity of any registered person who is preregistered in the user storage 130 (Step S105; No), the registration procedure shown in FIG. 7 is implemented (Step S109). The determiner 113 accesses the server 200 via the communicator 120 (Step S201). Next, the determiner 113 accesses the account of a registered person and acquires the account information of the registered person (Step S202). Next, a person who is registered as a friend with the registered person is extracted from the account information of the registered person (Step S203). Next, the determiner 113 acquires account information from the account of the person who is registered as a friend (Step S204). The information that is acquired here is the name and the facial characteristic quantity of the person who is registered as a friend. The facial characteristic quantity may be extracted from a face picture that is stored in the account. Next, the determiner 113 determines whether the facial characteristic quantity of the n-th person who appears in the acquired image matches the facial characteristic quantity of the person who is registered as a friend that is acquired from the server 200 (Step S205).

If determined to be matched (Step S205; Yes), the register 115 assumes that the n-th person is a person who is on close terms with the registered person and registers data that present the name and the facial characteristic quantity in the user storage 130 (Step S206). Subsequently, the registration procedure ends and the processing returns to the operation procedure shown in FIG. 6. Moreover, if determined to be unmatched (Step S205; No), the registration procedure ends and the processing returns to the operation procedure shown in FIG. 6.

Next, the operation controller 114 determines whether data that present the n-th person are registered (Step S110). If determined to be registered (Step S110; Yes), a second robot operation is executed (Step Sill). In detail, the second robot operation is, for example, to move closer to the n-th person, utter the name of the n-th person, say "How do you do?" in greeting as an expression of feeling, and the like. If determined to be not registered (Step S110; No), the variable n is incremented (Step S107) and if determined that the variable n > the number of persons, m, is not satisfied (Step S108; No), the processing returns to the Step S104. If determined that the variable n > the number of persons, m, is satisfied (Step S108; Yes), the operation procedure ends.

Next, the data transmission procedure that is executed by the server 200 and shown in FIG. 8 will be described.

The account information transmitter 211 of the server 200 determines whether there is an access from the robot 100 via the communicator 220 (Step S301). If determined that there is no access (Step S301; No), the Step S301 is repeated. If determined that there is an access (Step S301; Yes), information to access that is transmitted by the robot 100 to the account of the registered person is acquired and the account of the registered person is searched for (Step S302). Next, the account information of the registered person is transmitted to the robot 100 (Step S303).

Next, acquiring information to access a person who is registered as a friend with the registered person, which is transmitted by the robot 100, the account of the person who is registered as a friend with the registered person is searched for (Step S304). Next, account information of the person who is registered as a friend is transmitted (Step S305). The account information includes the name and the facial characteristic quantity of the person who is registered as a friend. Next, it is determined whether an end order is made (Step S306). If determined that no end order is made (Step S306; No), the processing returns to the Step S301. If determined that an end order is made (Step S306; Yes), the data transmission procedure ends.

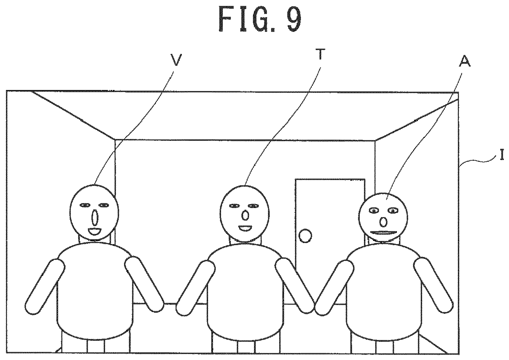

Next, the procedure that is executed by the robot 100 and the server 200 according to this embodiment will be described based on a specific case with reference to FIGS. 3, 5, and 9. In this case, a person A and a person B are registered with the robot 100 as shown in FIG. 3. There are three persons where the imager 103 of the robot 100 captures an image. The person A, who appears on the right in an acquired image I shown in FIG. 9, is a registered person who is preregistered with the robot 100. A person T, who appears in the middle, is registered as a friend under the account of the person A in the database 230 of the server 200 as shown in FIG. 5, and thus is on close terms with the person A. A person V who appears on the left is not preregistered with the robot 100 and not registered as a friend with the person A or the person B in the database 230 of the server 200.

First, the image acquirer 111 makes the imager 103 start capturing an image (Step S101; FIG. 6) and stores the captured image in the RAM as an acquired image I. Next, the image analyzer 112 detects the number of persons who appear in the acquired image I, m (Step S102; FIG. 6). Here, m = 3 is detected. Next, the variable n = 1 is set (Step S103; FIG. 6). Next, the image analyzer 112 extracts the facial characteristic quantity of the first person from the acquired image (Step S104; FIG. 6), In this case, it is assumed that the person A who appears on the right in the image is the first person, the person T in the middle is the second person, and the person V who appears on the left in the image is the third person. Next, the image analyzer 112 determines whether the facial characteristic quantity of the first person matches the facial characteristic quantity of a registered person who is preregistered in the user storage 130 (Step S105; FIG. 6).

The first person is the person A who appears on the right and therefore it is determined to be matched (Step S105; Yes; FIG. 6). The operation controller 114 executes the first robot operation of moving closer to the person A and uttering the name of the person A (Step S106; FIG. 6). Next, the variable n is incremented (Step S107; FIG. 6). Next, the variable n is 2 and the number of persons, m, is 3; therefore, it is determined that the variable n > the number of persons, m, is not satisfied (Step S108; No; FIG. 6). The processing returns to the Step S104 to extract the facial characteristic quantity of the second person T.

The person T is not preregistered in the user storage 130; therefore, the image analyzer 112 determines that the facial characteristic quantity of the person T does not match the facial characteristic quantity of any registered person who is preregistered in the user storage 130 (Step S105; No; FIG. 6) and the registration procedure is implemented (Step S109; FIG. 6). The determiner 113 accesses the accounts of the person A and the person B who are registered persons on the server 200 via the communicator 120 and acquires the account information of the person A and the person B (Step S202; FIG. 7). Next, persons who are registered as a friend with the registered persons are extracted from the account information of the person A and the person B (Step S203; FIG. 7). Here, the persons B, S, and T who are registered as a friend under the account of the person A and the persons A, X, and Y who are registered as a friend under the account of the person B are extracted. Next, the determiner 113 acquires account information from the accounts of persons who are registered as a friend (Step S204; FIG. 7). The information that is acquired here is information that presents the names and the facial characteristic quantities of the persons S, T, X, and Y who are registered as a friend. Next, the determiner 113 determines whether the facial characteristic quantity of the person T who appears in the acquired image and the facial characteristic quantity of any of the persons S, T, X, and Y match (Step S205; FIG. 7).

The person T is the same person as the person T who is registered as a friend under the account of the person A and therefore, it is determined to be matched (Step S205; Yes; FIG. 7). The register 115 assumes that the person T is a person who is on close terms with a registered person and automatically registers the name and the facial characteristic quantity of the person T in the user storage 130 (Step S206; FIG. 7). Subsequently, the registration procedure ends and the processing returns to the operation procedure. Next, the operation controller 114 determines that the person T is registered (Step S110; Yes; FIG. 6) and therefore, executes the second robot operation of moving closer to the person T, uttering the name of the person T, saying "How do you do?" in greeting as an expression of feeling, and the like (Step S110; FIG. 6).

Next, the variable n is incremented (Step S107; FIG. 6). Here, the variable n is 3 and the number of persons, m, is 3; therefore, it is determined that the variable n > the number of persons, m, is not satisfied (Step S108; No; FIG. 6) and the processing returns to the Step S104. The third person is the person V who appears on the left. The person V is not preregistered in the user storage 130; therefore, the image analyzer 112 determines that the facial characteristic quantity of the person V does not match the facial characteristic quantity of any registered person who is preregistered in the user storage 130 (Step S105; No; FIG. 6) and the registration procedure is implemented (Step S109; FIG. 6). The determiner 113 acquires account information of the person A and the person B that is stored on the server 200 via the communicator 120 (Step S202; FIG. 7). Next, persons S, T, X, and Y who are registered as a friend with a registered person are extracted from the account information of the person A and the person B (Step S203; FIG. 7). Next, the determiner 113 acquires account information from the accounts of the persons S, T, X, and Y (Step S204; FIG. 7). Next, the determiner 113 determines whether the facial characteristic quantity of the person V who appears in the acquired image and the facial characteristic quantity of any of the persons S, T, X, and Y match (Step S205; FIG. 7). The person V is not among the persons S, T, X, and Y who are registered as a friend under the accounts of the person A and the person B and it is determined to be unmatched (Step S205; No; FIG. 7); then, the registration procedure ends and the processing returns to the operation procedure shown in FIG. 6. Next, the operation controller 114 determines that the person V is not registered (Step S110; No; FIG. 6), and the variable n is incremented (Step S107). Here, the variable n is 4 and the number of persons, m, is 3; therefore, it is determined that the variable n > the number of persons, m, is satisfied (Step S108; Yes; FIG. 6), and the operation procedure ends.

As described above, according to the robot 100 of this embodiment, even if a person is an unregistered person who is not preregistered in the user storage 130, the name and the facial characteristic quantity of the person can automatically be registered in the user storage 130 if the person is close to a registered person who is registered in the user storage 130 based on an indicator that indicates the degree of closeness between the registered person and the unregistered person with reference to the database 230 of the server 200. Therefore, if a single person is registered as the user, the robot 100 can easily register a person who is close to the registered person with reference to the database 230 of the server 200 and it is possible to save on labor and time for user registration. Moreover, the robot 100 can move closer to a person who is newly registered in the user storage 130, utter the name of the person, say "How do you do?" in greeting as an expression of feeling, and the like; then, the new registration is known. Moreover, upon next startup, if the robot 100 captures an image of the newly registered person, the robot 100 can execute the same response to the response to a preregistered person.

### (Modified Embodiment)

In the foregoing embodiment, a case is described in which the robot 100 determines whether the characteristic quantity of a face that appears in the acquired image matches the facial characteristic quantity of a registered person who is preregistered in the user storage 130 to identify the person. As long as a person is identified, the robot 100 may identify a person by a method such as voice recognition of an utterance that is collected by a microphone as an utterance collector (utterance collecting means).

In the foregoing embodiment, a case is described in which when the determiner 113 of the robot 100 determines that a person is close to a registered person, the name, the facial characteristic quantity, and the like of the person who is determined to be close are registered in the user storage 130. When it is determined that a person is close to a registered person, the robot 100 may execute the same operation as the operation to respond to a registered person without registering the name, the facial characteristic quantity, and the like of the person in the user storage 130. Moreover, the robot 100 may register a person who is determined to be close to the user or a registered person who is preregistered and not register a person who is determined to be close to a person who is automatically newly registered. In this way, it is possible to register only persons who are directly close to the user or a registered person who is preregistered. Moreover, the robot 100 may register a person who is determined to be close to a person who is determined to be close to the user or a registered person who is preregistered and automatically newly registered. In this way, it is possible to register a person who is close to a person who is close to the user or a registered person who is preregistered. In order to determine whether to newly register an unregistered person, it may be possible to set how many persons can intervene between the user or a registered person who is preregistered and the unregistered person on an arbitrary basis.

In the foregoing embodiment, a person is determined to be close to a registered person using as an indicator that indicates the degree of closeness whether a person is registered as a friend that is included in the account information of a registered person that is stored on the server 200. The criterion to determine that a person is close to a registered person is not restricted to a person who is registered as a friend as long as it is based on an indicator that indicates the degree of closeness. For example, the number of times of a registered person having accessed the account of an unregistered person, the number of times of an unregistered person having accessed the account of a registered person, or the like may be used as an indicator that indicates the degree of closeness. As an indicator that indicates the degree of closeness, following from the account of a registered person to the account of an unregistered person, following from the account of an unregistered person to the account of a registered person, mutual following between the accounts of a registered person and an unregistered person, or the like may be used for the determination.

In detail, the determiner 113 of the robot 100 may determine that a determination target is a target that has a close relationship as a given relationship to a given target when the number of times of the account of the given target accessed by the determination target in a second device is equal to or higher than a first number of times.

Moreover, a determination target may be determined to be a target that has a close relationship as a given relationship to a given target when the determination target has an account on a second device or a third device that is different from the second device and when the number of times of the account of the determination target accessed by the given target is equal to or higher than a second number of times.

Moreover, a determination target may be determined to be a target that has a close relationship as a given relationship to a given target when the given target and the determination target have accounts on a second device or a third device that is different from the second device and when the number of times of following from the account of the given target to the account of the determination target or the number of times of following from the account of the determination target to the account of the given target is equal to or higher than a third number of times.

Moreover, a determination target may be determined to be a target that has a close relationship as a given relationship to a given target when the given target and the determination target have accounts on a second device or a third device that is different from the second device and when the number of times of mutual following between the account of the given target and the account of the determination target is equal to or higher than a fourth number of times.

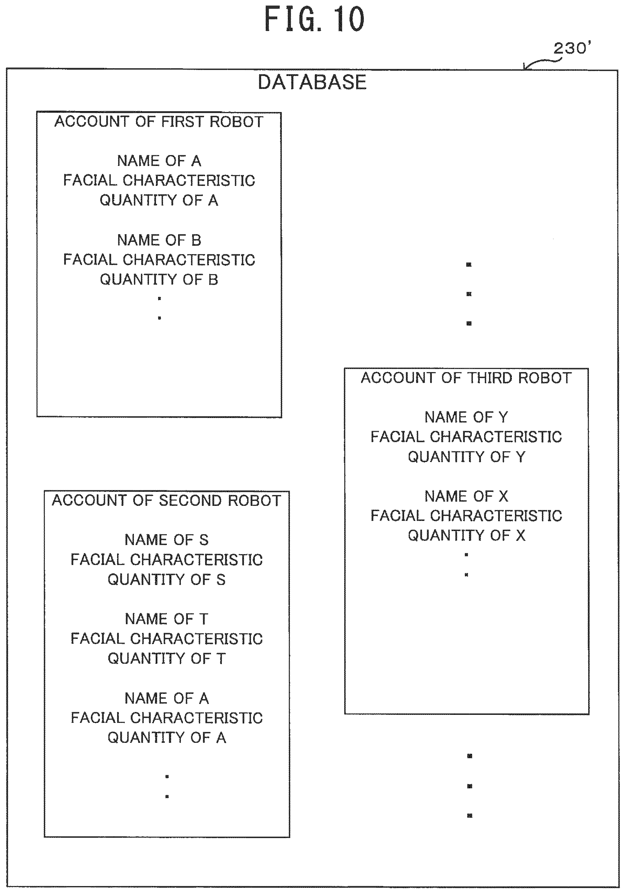

In the foregoing embodiment, a case is described in which the server 200 comprises an SNS server. The server 200 has only to be a device that stores an indicator that indicates the degree of closeness between an unregistered person and a registered person. For example, a server 200' has account information that is transmitted by multiple robots 100 and the account information includes the names and the facial characteristic quantities of persons who are registered with the robots 100. It may be possible to assume that persons who are registered in the same account information are close. In detail, the server 200' stores, as shown in FIG. 10, account information that is transmitted by a first robot 100A, account information that is transmitted by a second robot 100B that is other than the first robot 100A, and account information that is transmitted by a third robot 100C that is other than the first robot 100A and the second robot 100B. It is assumed that the first robot through the third robot 100A through 100C have the same configuration as the robot 100. Each account stores the names and the facial characteristic quantities of persons who are registered with the first robot through the third robot 100A through 100C. In this case, it is assumed that the persons who are registered under each of the accounts of the first robot through the third robot 100A through 100C are close. A person A and a person B are registered under the account of the robot 100A; therefore, the person A and the person B are close. A person S, a person T, and the person A are registered under the account of the robot 100B; therefore, the person S, the person T, and the person A are close. A person X and a person Y are registered under the account of the robot 100C; therefore, the person X and the person Y are close.

When a person who is not registered with the first robot 100A appears in an acquired image that is acquired by the first robot 100A, the first robot 100A accesses a database 230' of the server 200' and searches for a person who is close to the person A and the person B who are registered with the first robot 100A. On the server 200', persons who are close to the person A is the person B who is registered under the account of the first robot 100A and the person S and the person T who are registered under the account of the second robot 100B. The first robot 100A acquires the names and the facial characteristic quantities of the person B, the person S, and the person T from the server 200'. It is determined through face recognition whether the person who appears in the acquired image that is acquired by the first robot 100A is the person B, the person S, or the person T. If determined that the person who appears in the acquired image is the person S, the first robot 100A stores information of the name and the facial characteristic quantity of the person S that are acquired from the server 200'. In this way, the first robot 100A can acquire the name and the facial characteristic quantity of the person S who is registered with the second robot 100B via the server 200'.

In the foregoing embodiment, a case is described in which the robot 100 or the first robot through the third robot 100A through 100C determine whether a person has a close relationship to a registered person who is registered in the user storage 130 with reference to the database 230 of the server 200 or the database 230' of the server 200'. The robot 100 does not need to make reference to the database 230 of the server 200 or the database 230' of the server 200' as long as the robot 100 can determine whether a person is on close terms with a registered person who is registered in the user storage 130. For example, it may be possible that when the image analyzer 112 of the robot 100 detects in an acquired image a registered person who is registered in the user storage 130 and an unregistered person who is not registered in the user storage 130, the determiner 113 determines whether the unregistered person and the registered person are on close terms using the positional relationship between the registered person and the unregistered person as an indicator that indicates the degree of closeness. For example, the determiner 113 may measure the distance between the registered person and the unregistered person who appear in the acquired image and use the distance as an indicator that indicates the degree of closeness. In other words, it may be possible to determine that the unregistered person and the registered person are on close terms if the distance is equal to or smaller than a specific distance. Alternatively, it may be possible to measure the time that has elapsed while the distance is equal to or smaller than a specific distance and use the time as an indicator that indicates the closeness. For example, it may be possible to determine that the unregistered person and the registered person are close when, for example, three minutes have elapsed while the distance is equal to or smaller than 1 m. In other words, it may be possible to determine that the unregistered person and the registered person are on close terms when that time is equal to or longer than a specific time. If determined that the unregistered person and the registered person are on close terms, the facial characteristic quantity of the unregistered person is registered in the user storage 130.

In the foregoing embodiment, a case is described in which the robot 100 or the first robot through the third robot 100A through 100C identify a person as a target. The target to be determined by the robot 100 or the first robot through the third robot 100A through 100C (the determination target that is set forth in the claims) may be animals other than the human such as dogs and cats or objects such as other robots. This also similarly applies to the given target that is set forth in the claims. Moreover, it is determined whether a determination target corresponds to a target that has a close relationship to a given target. However, it may be determined whether to correspond to a target that has some other adequate relationship to a given target, for example a relationship through the same hobby.

In the foregoing embodiment, a case is described in which the imager 103 is provided at the position of the nose on the head 101. The imager 103 may be provided at any position and may be provided at the right eye or the left eye or provided at a position between the right eye and the left eye or at a position on the forehead. Moreover, the imager 103 may be provided at the right eye and the left eye so as to acquire three-dimensional images.

In the foregoing embodiment, a case is described in which the robot 100 has a figure that imitates a human. However, the robot 100 is not particularly restricted in figure and may have a figure that imitates an animal including dogs and cats or may have a figure that imitates an animation character or an imaginary creature.

The core part that performs the procedures that are executed by the controller 110 or 210 that comprises a CPU, a RAM, a ROM, and the like can be executed using, instead of a dedicated system, a conventional portable information terminal (a smartphone or a tablet personal computer (PC)), a personal computer, or the like. For example, a portable information terminal that executes the foregoing procedures may be configured by saving and distributing the computer program for executing the foregoing operations on a non-transitory computer-readable recording medium (a flexible disk, a compact disc read only memory (CD-ROM), a digital versatile disc read only memory (DVD-ROM), or the like) and installing the computer program on a portable information terminal. Moreover, an information processing device may be configured by saving the computer program on a storage device of a server device on a communication network such as the Internet and allowing a conventional portable information terminal to download the computer program. A controller that executes a robot operation may be separated from a controller that functions as the image acquirer 111, the image analyzer 112, and the determiner 113.

Moreover, when the function of the controller 110 or 210 is realized by apportionment of an operating system (OS) and an application program or cooperation of an OS and an application program, only the application program part may be saved on a non-transitory computer-readable recording medium or a storage device.

Moreover, the computer program may be superimposed on carrier waves and distributed via a communication network. For example, the computer program may be posted on a bulletin board system (BBS) on a communication network and distributed via the network. Then, the computer program is started and executed in the same manner as other application programs under the control of an OS so as to execute the foregoing procedures.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. An information processing device (110), comprising:
target information acquisition means (111) for acquiring information regarding a determination target,
first target determination means (112) for determining, based on the information that is acquired by the target information acquisition means (111), whether the determination target corresponds to a given target that is preregistered, and
second target determination means (113) for determining, based on the information that is acquired by the target information acquisition means (111), whether the determination target corresponds to a target that is other than the given target and has a given relationship to the given target.

2. The information processing device (110) according to claim 1, wherein when a determination is made that the determination target does not correspond to the given target, the second target determination means (113) executes the determination as to whether the determination target corresponds to a target that has the given relationship to the given target.

3. The information processing device (110) according to claim 1 or 2, wherein the second target determination means (113) determines, based on an indicator that indicates a degree of closeness between the determination target and the given target, whether the determination target corresponds to a target that has a close relationship as the given relationship to the given target.

4. The information processing device (110) according to any one of claims 1 to 3, further comprising:
registration means (115) for, when a determination is made by the second target determination means (113) that the determination target is a target that has the given relationship to the given target, automatically registering the determination target as a new given target.

5. The information processing device (110) according to any one of claims 1 to 4, wherein
when an image, captured by imaging means (103), in which the determination target appears is captured and the given target and the determination target that is determined to not correspond to the given target appear in the captured image, the second target determination means (113)
uses a distance between the determination target and the given target as an indicator that indicates a degree of closeness, and determines that the determination target is a target that has a close relationship as the given relationship to the given target in case that the distance between the determination target and the given target is no greater than a specific distance, or
uses a time that elapsed while the distance between the determination target and the given target is no greater than a specific distance as an indicator that indicates a degree of closeness, and determines that the determination target is a target that has a close relationship as the given relationship to the given target in case that the time that has elapsed while the distance is no greater than the specific distance is no shorter than a specific time.

6. The information processing device (110) according to any one of claims 1 to 5, wherein
the target information acquisition means (111) acquires, as the information regarding the determination target, a characteristic quantity from an image of the determination target that is captured by imaging means (103) or an utterance of the determination target that is collected by utterance collecting means.

7. The information processing device (110) according to any one of claims 1 to 6, further comprising:
communication means (120) for communicating with a second device that is different from the information processing device (110),
wherein the second target determination means (113) acquires, from the second device via the communication means (120), a relationship between the determination target that is determined to not correspond to the given target and the given target, and determines, based on the acquired relationship, whether the determination target is a target that has the given relationship to the given target.

8. The information processing device (110) according to claim 7, wherein when the given target is registered as a friend with the determination target on the second device, the second target determination means (113) determines that the determination target is a target that has a close relationship as the given relationship to the given target.

9. The information processing device (110) according to claim 7 or 8, wherein
the second device is a social network server (SNS) (200) on which the user or the given target has an account.

10. The information processing device (110) according to claim 9, wherein
the second target determination means (113) is able to log in the account of the user or the given target on the SNS (200) via the communication means (120).

11. The information processing device (110) according to claim 9 or 11, wherein
when the given target is registered as a friend with the determination target on the second device,
the account of the given target on the SNS (200) includes a face picture of the determination target, an utterance of the determination target, and personal information of the determination target, and
the second target determination means (113) obtains the face picture of the determination target, the utterance of the determination target, and the personal information of the determination target via the communication means (120).

12. The information processing device (110) according to any one of claims 1 to 11, wherein
the determination target is a human, animal, or robot, and the given target is a human, animal, or robot.

13. The information processing device (110) according to any one of claims 1 to 12, wherein
the second target determination means (113) sets a number of close people who are intervenable between the determination target and the given target.

14. The information processing device (110) according to claim 7, wherein
the second target determination means (113) determines that the determination target is a target that has a close relationship as the given relationship to the given target when a number of times of the account of the given target accessed by the determination target on the second device is not less than a first number of times.

15. The information processing device (110) according to claim 7, wherein
a determination is made that the determination target is a target that has a close relationship as the given relationship to the given target when the determination target has an account on the second device or a third device that is different from the second device and a number of times of the account of the determination target accessed by the given target is not less than a second number of times.

16. The information processing device (110) according to claim 7, wherein
a determination is made that the determination target is a target that has a close relationship as the given relationship to the given target when the given target and the determination target have accounts on the second device or a third device that is different from the second device and a number of times of following from the account of given target to the account of the determination target or a number of times of following from the account of the determination target to the account of the given target is not less than a third number of times.

17. The information processing device (110) according to claim 7, wherein
a determination is made that the determination target is a target that has a close relationship as the given relationship to the given target when the given target and the determination target have accounts on the second device or a third device that is different from the second device and a number of times of mutual following between the account of the given target and the account of the determination target is not less than a fourth number of times.

18. A robot, comprising:
the information processing device (110) according to any one of claims 1 to 17;
a moving device (105) that makes the robot travel autonomously;
an operation device (114) that makes the robot perform an operation; and
a control device (110) that controls the moving device (105) and the operation device (114).

19. The robot according to claim 18, wherein
when the second target determination means (113) of the information processing device (110) determines that the given target is a target that has a close relationship to the given relationship,
the control device (110) controls the moving device (105) to move the robot closer to the determination target and controls the operation device (114) to make the robot perform a given operation to the determination target as an expression of feeling.

20. An information processing method for an information processing device (110), including:
acquiring information regarding a determination target;
determining, based on the information that is acquired, whether the determination target corresponds to a given target that is preregistered; and
determining, based on the information that is acquired, whether the determination target corresponds to a target that is other than the given target and has a given relationship to the given target.

21. A program for allowing a computer of an information processing device (110) to function as:
target information acquisition means (111) for acquiring information regarding a determination target;
first target determination means (112) for determining, based on the information that is acquired by the target information acquisition means (111), whether the determination target corresponds to a given target that is preregistered; and
second target determination means (113) for determining, based on the information that is acquired by the target information acquisition means (111), whether the determination target corresponds to a target that is other than the given target and has a given relationship to the given target.
